# FASCICULE DE BREVET EUROPEEN

(11) **EP 1 905 215 B1**
(45) Date de publication et mention de la délivrance du brevet: **07.11.2018**
(21) Numéro de dépôt: 06778990.9
(22) Date de dépôt: 28.06.2006
(51) Int. Cl.: H04L 12/24, H04L 12/28, H04L 29/06, H04L 29/08, H04L 29/14, H04W 4/70

(54) **DISPOSITIF ET SYSTÈME DE COMMUNICATION POUR LA MISE EN OEUVRE D'UN SYSTÈME DE GESTION À DISTANCE D'ÉQUIPEMENTS**
KOMMUNIKATIONSEINRICHTUNG UND SYSTEM ZUM IMPLEMENTIEREN EINES VON EINRICHTUNGEN ENTFERNTEN VERWALTUNGSSYSTEMS
COMMUNICATIONS DEVICE AND SYSTEM FOR IMPLEMENTING A MANAGEMENT SYSTEM REMOTE FROM DEVICES

(30) Priorité: 30.06.2005 FR 0551859
(43) Date de publication de la demande: 02.04.2008
(73) Titulaire: Orange, 75015 Paris (FR)
(72) Inventeur: BARRANCO, Jocelyn, F-92130 Issy Les Moulineaux (FR); KIESSLING, Lars, F-92320 Chatillon (FR); JULIEN, Anne, F-78590 Noisy Le Roi (FR)
(86) Numéro de dépôt international: PCT/FR2006/050646
(87) Numéro de publication internationale: WO 2007/003848

(56) Documents cités:
- EP-A- 1 388 830
- US-A1- 2001 034 791
- US-A1- 2002 187 775
- US-A1- 2002 194 387
- US-A1- 2003 105 825
- US-A1- 2004 203 614
- US-A1- 2004 218 609

## Description

L'invention concerne un dispositif de communication pour la mise en oeuvre d'un système de gestion à distance d'équipements ainsi qu'un système de communication pour la mise en oeuvre d'un système de gestion à distance d'équipements.

L'invention s'applique au domaine technique des communications machine à machine, noté M2M en abrégé. Dans ces techniques de communications, on considère deux catégories de machines:
- la première catégorie est constituée par les équipements destinés à être commandés à distance et comportant une application embarquée; il s'agit par exemple d'un distributeur automatique de boisson, d'un compteur d'eau, etc;
- la deuxième catégorie est constituée par les systèmes informatiques de type serveurs de traitement, intégrant une application de gestion destinée à communiquer avec une application embarquée dans un équipement afin de mettre en oeuvre la gestion à distance de cet équipement.

La gestion à distance d'équipement peut concerner différents aspects: la supervision de l'équipement, son pilotage à distance, le paramétrage à distance et la mise à jour à distance de l'équipement ou encore la mise en oeuvre de fonctions de télésurveillance, de télémétrie, de télédétection, etc. Cette gestion à distance est effectuée le plus souvent par échanges de messages entre l'application embarquée et l'application de gestion.

De tels systèmes de gestion à distance sont connus des demandes de brevet US 2004/0218609 A1, US 2002/0194387 A1 et EP1388830 A1; des systèmes de routage de messages en fonction de paramètres convoyés par ces messages sont également connus des demandes de brevet US 2003/0105825 A1 et US 2004/0203614. Par exemple, dans le cas d'un système de gestion à distance de distributeurs automatiques de boissons, des messages peuvent être transmis:
- d'une part du système informatique vers les distributeurs, par exemple pour modifier les prix de vente des produits vendus, mettre à jour l'application embarquée, ou mettre à jour les paramètres de la machine;
- d'autre part d'un distributeur vers le système informatique, par exemple pour remonter des alarmes en cas de détection d'infraction ou de panne électrique, de remonter des informations sur l'état du stock de boissons du distributeur, de remonter des informations statistiques sur les produits consommés.

Les systèmes actuels de gestion à distance d'équipement ne présentent pas des performances suffisantes quant à la gestion de la communication M2M du fait notamment de la complexité de ce type de communication. Il s'agit en effet d'une communication fonctionnant par commandes / réponses, nécessitant pour être performante un certain degré d'automatisation du traitement des messages ainsi que des garanties en terme de fiabilité des échanges ou en terme de qualité de service.

De plus, les solutions actuelles dans le domaine du M2M sont très peu standardisées, et en conséquence, les coûts de développement pour la mise en oeuvre de solutions performantes sont trop élevés.

L'invention a pour but de fournir une solution de gestion à distance d'équipements ne présentant pas les inconvénients cités pour les solutions actuelles, facilitant le déploiement et la standardisation des systèmes de gestion à distance d'équipements, améliorant le degré d'automatisation du traitement des messages, tout en réduisant le coût de réalisation et de maintenance de ces systèmes.

L'invention est définie par la revendication 1 de système comprenant un premier dispositif et un deuxième dispositif. Dans ce but, l'invention a pour objet un premier dispositif de communication pour la mise en oeuvre d'un système de gestion à distance d'au moins un équipement, au moyen d'une application de gestion apte à communiquer via un réseau de télécommunication avec une application embarquée dans ledit équipement, ce premier dispositif de communication comprenant,
- une première interface de communication pour la mise en oeuvre d'une liaison locale de communication avec ladite application embarquée,
- une deuxième interface de communication pour l'accès audit réseau de télécommunication,
- des moyens de gestion de communication apte à communiquer avec ladite application embarquée via ladite première interface et avec ladite application de gestion via ladite deuxième interface et ledit réseau de télécommunication,
lesdits moyens de gestion de communication servant de relais de communication pour les communications par message entre ladite application embarquée et ladite application de gestion,
lesdits moyens de gestion de communication étant aptes à transférer au moins un message, en provenance d'une des deux applications vers l'autre application, selon des règles de transfert prédéfinies et en fonction d'au moins un paramètre, joint audit message et au moyen duquel un mode de transfert est spécifié pour ledit message par l'application émettrice dudit message.

De manière symétrique, l'invention a également pour objet un deuxième dispositif de communication pour la mise en oeuvre d'un système de gestion à distance d'au moins un équipement, au moyen d'une application de gestion apte à communiquer via un réseau de télécommunication avec une application embarquée dans ledit équipement, ce dispositif de communication comprenant,
- une première interface de communication pour la mise en oeuvre d'une liaison de communication avec ladite application de gestion,
- une deuxième interface de communication pour l'accès audit réseau de télécommunication,
- un module de gestion de communication apte à communiquer avec ladite application de gestion via ladite première interface et avec ladite application embarquée via ladite deuxième interface et ledit réseau de télécommunication,
lesdits moyens de gestion de communication servant de relais de communication pour les communications par message entre ladite application embarquée et ladite application de gestion,
lesdits moyens de gestion de communication étant aptes à transférer au moins un message, en provenance d'une des deux applications vers l'autre application, selon des règles de transfert prédéfinies et en fonction d'au moins un paramètre, joint audit message et au moyen duquel un mode de transfert est spécifié pour ledit message par l'application émettrice dudit message.

Le premier ou deuxième dispositif de communication selon l'invention, comporte ainsi une fonction intelligente de transfert de message permettant de répondre aux besoins de la plupart des équipements, s'appuyant sur des règles de transfert prédéfinies et commandée au moyen d'un ou plusieurs paramètres joints aux messages à transmettre.

En outre, ce dispositif de communication, de par sa double interface, est adapté aussi bien à la communication avec l'application embarquée qu'à la communication avec le réseau. On dispose ainsi d'un dispositif de communication générique jouant un rôle d'interface intelligente entre l'équipement et le réseau de télécommunication.

Avantageusement les règles de transfert sont indépendantes de l'application embarquée et de l'application de gestion.

Plus généralement, le dispositif de communication selon l'invention est conçu indépendamment du type d'équipement à gérer, et indépendamment de son application embarquée ou de l'application de gestion. Il constitue ainsi un module générique, standardisé, assurant la fonction de relais de communication entre l'application embarquée et l'application de gestion.

Selon une variante de réalisation, les moyens de gestion de communication sont aptes àétablir une session de communication entre ladite application embarquée et ladite application de gestion, les moyens de gestion de communication étant transparents vis-à-vis de ladite session après l'établissement de ladite session. Le dispositif de communication est donc adapté aussi bien à la gestion de communication en mode message qu'en mode session.

Selon une variante de réalisation du module selon l'invention, ledit au moins un paramètre comprend un premier paramètre définissant un mode de sélection pour la sélection d'un service de transport de données à utiliser dans la transmission dudit message et les moyens de gestion de communication comprennent des moyens de sélection de service de transport de données pour sélectionner, en fonction desdites règles de transfert et dudit premier paramètre, un service parmi plusieurs services de transport de données supportés par ledit réseau de télécommunication.

En variante, ledit au moins un paramètre comprend un deuxième paramètre définissant un niveau de priorité pour ledit message à transmettre et les moyens de sélection de service de transport de données sont conçus pour sélectionner, en fonction desdites règles de transfert et en fonction desdits premier et deuxième paramètres, un service parmi plusieurs services de transport de données supportés par ledit réseau de télécommunication.

Le dispositif de communication selon l'invention intègre ainsi une fonction avancée de sélection d'un service de transport qui est activée en fonction de paramètres reçus avec le ou les messages à transmettre. La fonction de transfert est ainsi paramétrable en fonction des besoins de l'application embarquée.

Selon une autre variante de réalisation du module selon l'invention, les moyens de sélection de service de transport de données sont conçus pour sélectionner un service en fonction d'un critère de coût de communication ou en fonction d'un critère de qualité de service.

Le dispositif de communication selon l'invention permet ainsi une amélioration de la qualité et/ou du coût des communications de machine à machine.

Selon une variante de réalisation, le premier dispositif de communication selon l'invention est adapté pour communiquer via ladite première interface avec au moins deux équipements intégrant chacun une application embarquée et pour router un message reçu en provenance de ladite application de gestion à l'équipement destinataire du message en fonction d'au moins une donnée d'adressage jointe audit message.

De cette manière, le premier dispositif de communication est avantageusement utilisable pour une pluralité d'équipements, ce qui réduit fortement les coûts de réalisation de la solution de gestion à distance d'équipement intégrant un tel dispositif de communication.

Selon une autre variante de réalisation, le premier dispositif de communication selon l'invention communique avec ladite application de gestion par l'intermédiaire d'un relais de communication interconnecté audit réseau de communication et comprend des moyens de surveillance pour envoyer à intervalles de temps réguliers audit relais de communication un message prédéfini, véhiculé via au moins un service de transport de données et destiné à permettre la détection d'anomalies prédéfinies dans la communication via ledit au moins un service de transport de données.

Le relais de communication est par exemple une plate-forme de communication, adaptée pour le stockage temporaire de messages. L'émission de messages prédéfinis permet de détecter la présence d'anomalies prédéfinies dans la communication entre ledit dispositif de communication et ledit relais de communication et de déclencher une alerte en cas d'interruption ou de détérioration de la communication.

Selon encore une autre variante de réalisation, le premier dispositif de communication selon l'invention comprend des moyens de surveillance pour :
- demander à ladite application embarquée de lui envoyer à intervalles de temps réguliers un message prédéfini,
- surveiller la réception desdits messages prédéfinis,
- alerter ladite application de gestion en cas d'anomalie ou d'interruption dans la réception desdits messages prédéfinis.

De cette manière le module est en mesure de détecter un disfonctionnement de l'application embarquée se répercutant sur sa capacité à communiquer correctement.

L'invention a également pour objet un système de communication pour la mise en oeuvre d'un système de gestion à distance d'au moins un équipement au moyen d'une application de gestion apte à communiquer via un réseau de télécommunication avec une application embarquée dans ledit équipement, ledit système de communication comprenant,
- un premier dispositif de communication selon l'invention,
- un deuxième dispositif de communication selon l'invention,
ledit premier dispositif et ledit deuxième dispositif étant conçus pour communiquer l'un avec l'autre via ledit réseau de télécommunication pour la mise en oeuvre des communications entre ladite application de gestion et ladite application embarquée.

Le système selon l'invention permet la mise en oeuvre d'un service performant de communication de type M2M entre l'application de gestion et l'application embarquée, tirant profit des avantages de chacun des dispositifs de communication.

Dans un mode de réalisation particulier du système de communication selon l'invention, ledit premier dispositif et ledit deuxième dispositif sont conçus pour communiquer l'un avec l'autre par l'intermédiaire d'une plate-forme de communication servant de relais de communication entre ledit premier module et ledit deuxième module.

Ce mode de réalisation permet la mise en oeuvre, au niveau de la plate-forme de fonctionnalités avancées de communication, accessibles par plusieurs application de gestion et complémentaires de celles présentes dans le premier ou le deuxième dispositif de communication.

Par exemple, ladite plate-forme de communication est adaptée pour demander par message au premier dispositif de communication de lui envoyer à intervalles de temps réguliers un message prédéfini, et pour alerter ladite application de gestion en cas d'anomalie ou d'interruption dans l'envoi des messages prédéfinis.

De cette manière, un problème de fiabilité des échanges de message entre l'application embarquée et l'application de gestion ou d'état de fonctionnement du premier dispositif de communication peut être détecté.

D'autres buts, caractéristiques et avantages de l'invention apparaîtront à travers la description qui va suivre, donnée uniquement à titre d'exemple non limitatif, et faite par référence aux dessins annexés sur lesquels:
- la figure 1a est une représentation schématique d'un premier mode de réalisation d'un système de gestion à distance d'équipements,
- la figure 1b est une représentation schématique d'un deuxième mode de réalisation d'un système de gestion à distance d'équipements,
- la figure 1c est une représentation schématique d'un troisième mode de réalisation d'un système de gestion à distance d'équipements,
- la figure 2a est une représentation schématique d'un premier mode de réalisation d'un dispositif de communication selon l'invention,
- la figure 2b est une représentation schématique d'un deuxième mode de réalisation d'un dispositif de communication selon l'invention,
- la figure 3a est une représentation schématique d'un premier mode de communication entre un dispositif de communication et une application embarquée dans un équipement,
- la figure 3b est une représentation schématique d'un deuxième mode de communication entre un dispositif de communication et une application embarquée dans un équipement,
- la figure 4a est une représentation schématique des messages échangés dans un système de gestion à distance d'équipements correspondant à un premier cas d'échange de messages,
- la figure 4b est une représentation schématique des messages échangés dans un système de gestion à distance d'équipements correspondant à un deuxième cas d'échange de messages,
- la figure 4c est une représentation schématique des messages échangés dans un système de gestion à distance d'équipements correspondant à un troisième cas d'échange de messages,
- la figure 4d est une représentation schématique des messages échangés dans un système de gestion à distance d'équipements correspondant à un quatrième cas d'échange de messages.

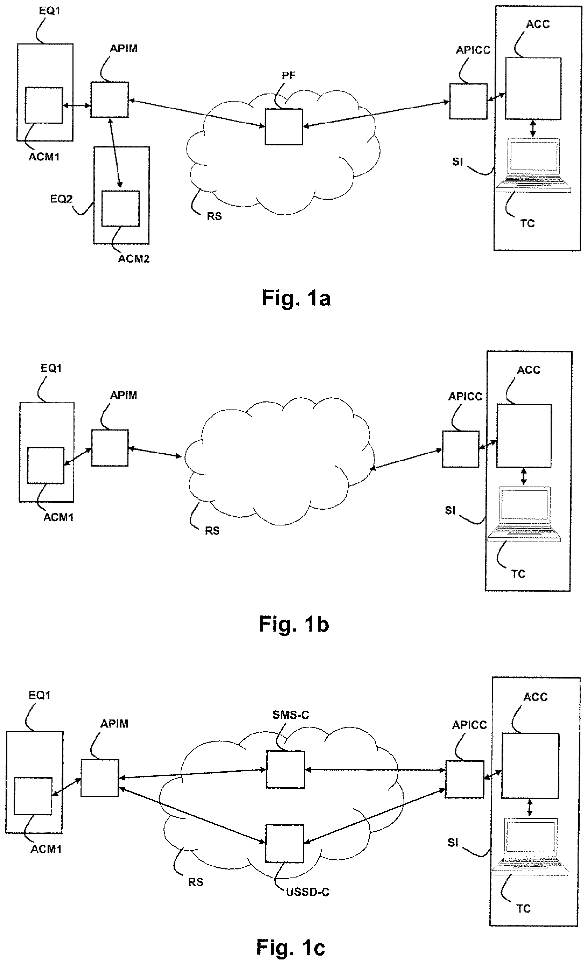

La figure 1a est une représentation schématique d'un premier mode de réalisation d'un système de gestion à distance d'équipements.

Ce système est articulé autour d'un réseau de télécommunication RS. Le réseau de télécommunication RS est par exemple un réseau cellulaire, de type GSM (Global System for Mobile communication), GPRS (General Packet Radio Service), UMTS (Universal Mobile Telecommunication System) ou encore un réseau IP (Internet Protocol), un réseau X25, etc. L'invention est décrite dans le mode de réalisation dans lequel le réseau de télécommunication RS est un réseau cellulaire GSM / GPRS.

Le système de gestion à distance d'équipements représenté à la figure 1a comprend un équipement EQ1 intégrant une application embarquée ACM1, apte à communiquer via le réseau de télécommunication RS avec une application de gestion ACC distante, pilotée via un terminal TC et hébergée par exemple dans le système informatique SI de l'entreprise responsable de la gestion de cet équipement EQ1.

Le système de la figure 1a comprend en outre un deuxième équipement EQ2 intégrant une application embarquée ACM2, apte à communiquer via le réseau de télécommunication RS avec l'application de gestion ACC distante.

La gestion à distance de l'équipement s'effectue par échanges de données entre l'application embarquée ACM1 ou ACM2 et l'application de gestion ACC. Ces échanges de données peuvent s'effectuer en utilisant des communications en mode message (communication par messages de type commandes / réponses) ou des communications en "mode session" (communication par un flux de données).

Dans le mode de réalisation de la figure 1a, l'application embarquée ACM1 communique, respectivement l'application embarquée ACM2, avec l'application de gestion ACC par l'intermédiaire d'un dispositif de communication APIM côté équipement, d'une plate-forme de communication PF et d'un dispositif de communication APICC, côté application de gestion.

Le dispositif de communication APIM constitue une interface de communication entre l'application embarquée ACM1 et le réseau de télécommunication RS. De même, le dispositif de communication APICC constitue une interface de communication entre l'application de gestion ACC et le réseau de télécommunication RS.

Le dispositif ou module de communication APIM côté équipement est dénommé dans la suite de la description de manière simplifiée "module APIM". De même, le dispositif ou module de communication APICC, côté application de gestion, est dénommé de manière simplifiée "module APICC".

Le dispositif de communication APIM est conçu pour pouvoir servir d'interface de communication à un ou plusieurs équipements EQ1, EQ2, etc. Le système de gestion d'équipements se généralise à une pluralité d'équipements, une même application de gestion étant susceptible de communiquer via une même plate-forme de communication PF et un même dispositif de communication APIM avec une pluralité d'équipements qui lui sont associés. En variante, une application de gestion donnée communique avec un ou plusieurs dispositifs de communication APIM côté équipement, chacun servant d'interface de communication à un ou plusieurs équipements. De préférence une application de gestion communique via un seul dispositif de communication APICC côté application de gestion.

La plate-forme de communication PF est de préférence commune à toutes les applications de gestion et tous les équipements et est hébergée par un opérateur de réseau. En variante, la plate-forme est commune au moins à un groupe d'applications de gestion et à leurs équipements associés.

La plate-forme de communication PF sert de relais de communication et comprend notamment un support informatique de stockage de données pour le stockage temporaire des données échangées entre les applications de gestion et les applications embarquées. Optionnellement, elle comprend en outre des modules logiciels de traitement de données utilisés pour traiter les données échangées selon des règles de traitement prédéfinies. Ces règles de traitement comprennent par exemple des règles de traitement des données en fonction de leur degré de priorité, une liste de tests ou d'actions à effectuer sur les données échangées. Une description plus détaillée d'un exemple de réalisation d'une telle plate-forme peut être trouvée dans le document de brevet publié sous le numéro EP 1 388 830.

Le dispositif de communication APIM sert de passerelle de communication pour les deux équipements associés à ce module APIM. Les données émises par l'application de gestion ACC et destinées à l'application embarquée ACM1 sont routées via le dispositif de communication APIM avant d'être transférées à l'application embarquée ACM1. De même, les données émises par l'application de gestion ACC et destinées à l'application embarquée ACM2 sont routées via le dispositif de communication APIM avant d'être transférées à l'application embarquée ACM2.

Le protocole utilisé pour la communication entre le dispositif de communication APIM et la plate-forme de communication PF est par exemple le protocole BEEP (Block Extensible Exchange Protocol) ou un autre protocole adapté pour l'envoi de messages.

Les communications entre la plate-forme de communication PF et dispositif de communication APICC utilisent par exemple le standard d'échange de messages SOAP (acronyme venant de Simple Object Access Protocol), le protocole HTTPS (la version sécurisée de HTTP, HyperText Transfer Protocol) et un format de données XML (Extensible Markup Language).

La figure 1b est une représentation d'un deuxième mode de réalisation d'un système de gestion à distance d'équipements.

Dans ce deuxième mode de réalisation, les dispositifs de communication APIM et APICC communiquent directement l'un avec l'autre via le réseau de télécommunication RS, sans passer par l'intermédiaire d'une plate-forme de communication.

La figure 1c est une représentation d'un troisième mode de réalisation d'un système de gestion à distance d'équipements.

Dans ce troisième mode de réalisation, les dispositifs de communication APIM et APICC communiquent l'un avec l'autre en mode message au moyen du réseau de télécommunication RS et par l'intermédiaire d'un centre de gestion de message. Ce centre de gestion de message est par exemple un centre SMS-C (Short Message Service Center) dans le cas d'envoi de données par le service SMS ou encore un centre USSD-C (Unstructured Supplementary Service Data Center) dans le cas d'envoi de données par le service USSD. De tels centres de gestion de message sont connus dans le domaine des réseaux GSM et ne seront pas décrits plus en détail ici. Leur fonction principale est d'assurer un stockage temporaire des données ne pouvant être transférées immédiatement à leur destinataire, dans le cas par exemple où le terminal GSM du destinataire n'est pas en état de réception.

Dans ce mode de réalisation, le protocole utilisé pour la communication entre le centre SMS-C et le dispositif de communication APICC peut être différent du protocole utilisé pour la communication entre le dispositif de communication APIM et le centre SMS-C. Le protocole utilisé pour la communication entre le dispositif de communication APIM et la plate-forme de communication PF, est le protocole SMS ou un autre adapté pour la transmission de messages SMS et compatible avec le centre SMS-C. Le protocole utilisé pour la communication entre la plate-forme de communication PF et le dispositif de communication APICC est par exemple le protocole SOAP ou le protocole SMPP (Short Message Service - Peer to Peer).

La suite de la description se réfère au mode de réalisation de la figure 1a.

Dans le réseau de communication RS, il est possible de mettre en oeuvre deux types de communication: des communications en mode message et des communications en mode session. Le système selon l'invention permet, la mise en oeuvre de ces deux types de communication entre l'application de gestion ACC et l'application embarquée ACM1 ou l'application embarquée ACM2, via les dispositifs de communication APIM et APICC.

Les communications en mode message s'effectuent usuellement au moyen de messages ou paquets, porteurs des données à transmettre échangées entre l'application embarquée ACM1 et l'application de gestion ACC. Dans les réseaux GSM, différents services de transport de données sont disponibles, par exemple:
- le service de messages courts SMS (Short Message Service),
- le service supplémentaire non structuré de transmission de données USSD (Unstructered Supplementary Service Data),
- le service de transmission de données en mode circuit CSD (Circuit Switched Data) ou HSCSD (High Speed Circuit Switched Data),
- le service général de radiocommunication en mode paquet GPRS (General Packet Radio Service).

Dans le système selon l'invention, il est possible d'établir, entre l'application embarquée ACM1 et l'application de gestion ACC, une communication en mode message utilisant sélectivement l'un ou l'autre des services de transport de données cités. En outre, comme décrit plus en détail ci-dessous, l'invention permet de tirer profit de la présence de ces différents services pour améliorer la qualité de service ou le coût des communications entre l'application embarquée ACM1 et l'application de gestion ACC.

Les communications en mode session permettent l'établissement d'un flux de données entre deux entités. Dans le système selon l'invention, il est possible d'établir une communication en mode session entre l'application embarquée ACM1 et l'application de gestion ACC. De telles communications s'effectuent au moyen de protocoles appropriés au mode session, par exemple HTTP ou FTP.

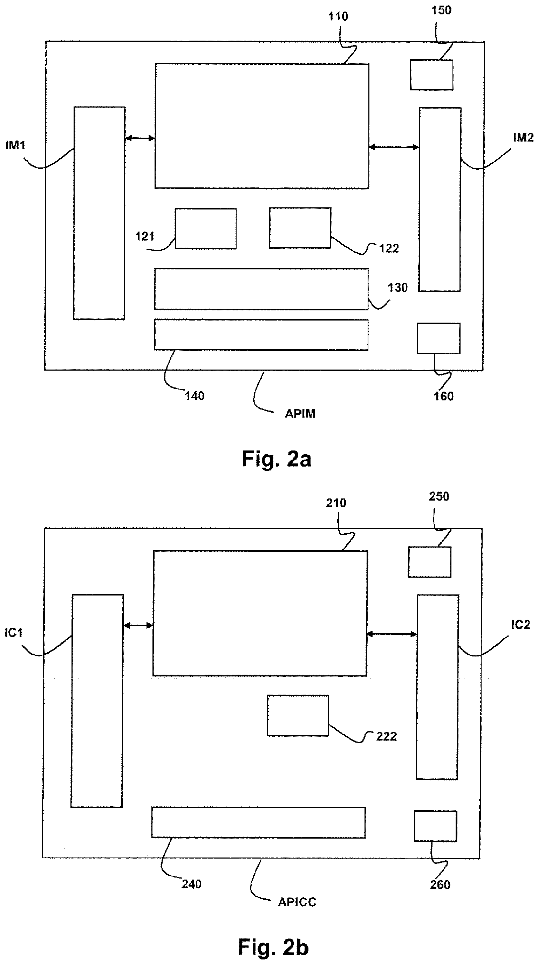

La figure 2a est une représentation schématique d'un mode de réalisation du premier dispositif de communication selon l'invention, approprié à la réalisation du dispositif de communication APIM côté équipement.

Le dispositif de communication APIM est réalisé de préférence au moyen d'un microprocesseur et comprend les éléments logiciels ou matériels suivants:
- une première interface IM1 de communication,
- une deuxième interface IM2 de communication,
- un module 110 de gestion de communication,
- un module 121 de surveillance des communications effectuées via l'interface IM1,
- un module 122 de surveillance des communications effectuées via l'interface IM2,
- un module 130 d'accès à des services du réseau,
- un module 140 de gestion de configuration;
- un module 150 d'identification d'abonné;
- un support 160 de stockage de données.

L'interface IM1 de communication permet la mise en oeuvre d'une liaison locale de communication avec l'application embarquée ACM1; elle comprend par exemple un port IrDA (Infrared Data Association) dans le cas d'une liaison infrarouge, un port NFC dans le cas d'une liaison sans contact, un modem radio dans le cas d'une liaison Bluetooth, ou une interface série dans le cas d'une liaison série par câble. En variante, lorsque le module APIM est intégré dans l'équipement avec l'application embarquée ACM1, l'interface IM1 de communication peut être réalisée au moyen d'un bus de données ou d'une simple interface logicielle.

L'interface IM2 de communication permet l'accès au réseau de télécommunication RS et la transmission de données via ce réseau; elle comprend par exemple un modem GSM/GPRS, un modem UMTS, un modem RTC, un modem ADSL, ....

Le module 110 de gestion de communication, désigné également ci-après module relais 110, est apte à communiquer, d'une part, avec ladite application embarquée ACM1 via l'interface IM1 et, d'autre part, avec l'application de gestion ACC distante via l'interface IM2 et via le réseau de télécommunication RS. Ce module relais 110 permet de gérer et relayer les communications entre l'application embarquée ACM1 et l'application de gestion ACC, respectivement entre l'application embarquée ACM2 et l'application de gestion ACC.

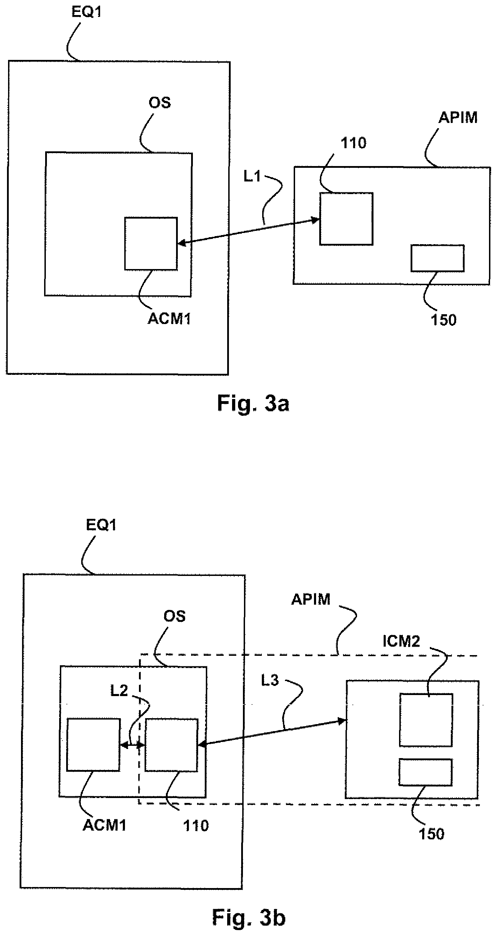

La figure 3a est une représentation schématique du mode de communication entre le module relais 110 du dispositif de communication APIM et l'application embarquée ACM1 de l'équipement EQ1.

Dans ce mode de communication, la communication entre le module relais 110 du dispositif de communication APIM et l'application embarquée ACM1 est réalisée au moyen d'une liaison locale de communication L1, par exemple une liaison radio courte portée selon le standard Bluetooth ou WiFi.

La figure 3b est une représentation schématique d'une variante du mode de communication entre le module relais 110 du dispositif de communication APIM et l'application embarquée ACM1 de l'équipement EQ1.

Selon cette variante, une partie du dispositif de communication (module 110 de gestion de communication) est intégré dans l'équipement EQ1 et la liaison de communication entre le module 110 et l'application embarquée ACM1 est mise en oeuvre sous la forme d'une simple interface logicielle L2 par appel de fonction locale. L'autre partie du dispositif de communication APIM (modules 150 et interface IM2) est externe à l'équipement. Les deux parties du dispositif de communication APIM communiquent via une liaison locale L3, par exemple une liaison radio, infrarouge ou autre. Les deux parties du dispositif de communication peuvent bien entendu être complètement intégrées dans l'équipement lui-même, cet équipement devenant alors autonome.

La fonction du module 121 de surveillance est de détecter la présence d'anomalies prédéfinies dans la communication via l'interface IM1, notamment dans les communications avec l'application embarquée ACM1.

Le module 121 envoie des messages prédéfinis, indicateurs de bon fonctionnement à l'application embarquée ACM1 pour vérifier que celle-ci y répond normalement. Ces messages de bon fonctionnement sont de préférence envoyés à intervalles de temps prédéfinis. En cas d'anomalie (absence de réponse ou réponse anormale ou délai anormal de réponse), le module 121 déclenche via le module de gestion de communication l'envoi d'un message d'alerte vers l'application de gestion ACC.

En variante, le module 121 demande à l'application embarquée ACM1 de lui envoyer à intervalles de temps réguliers des messages prédéfinis, indicateurs de bon fonctionnement. En cas d'anomalie (absence de message ou message anormal ou délai anormal entre deux messages), le module 121 déclenche via le module de gestion de communication l'envoi d'un message d'alerte vers l'application de gestion ACC.

La fonction du module 122 de surveillance est de détecter la présence d'anomalies prédéfinies dans la communication avec l'application de gestion ACC, avec une plate-forme de communication PF, avec un autre dispositif situé dans le réseau de télécommunication RS, ou plus généralement, dans l'accès au réseau de télécommunication RS via les différents services proposés.

Le module 122 échange des messages prédéfinis, indicateurs de bon fonctionnement, avec la plate-forme de communication PF et celle-ci vérifie qu'elle les reçoit normalement. Ces messages de bon fonctionnement sont de préférence envoyés à intervalles de temps prédéfinis. En cas d'anomalie (absence de message ou message anormal ou délai anormal entre deux messages), la plate-forme de communication PF déclenche via le module APICC l'envoi d'un message d'alerte vers application de gestion ACC, l'informant notamment d'un problème de disponibilité d'un des services de transport de données.

En variante, le module 122 échange des messages de bon fonctionnement non pas avec la plate-forme de communication PF mais avec le module APICC directement.

Le module 130 d'accès à des services du réseau permet d'accéder à des services prédéfinis accessibles via le réseau de télécommunication RS. Un tel service est par exemple un service permettant l'obtention de données de type date et heure courante. Ces données peuvent être utilisées par exemple pour la configuration du module relais 110 ou de l'application embarquée ACM1.

Le module 140 de gestion de configuration permet de gérer la configuration logicielle de l'application embarquée ACM1 et/ou celle du dispositif de communication APIM lui-même, notamment d'effectuer les mises à jour ou téléchargements de logiciel nécessaires à cette configuration logicielle. Il intègre des fonctionnalités telles que :
- détermination de la ou les version(s) logicielle(s) courante(s),
- téléchargement et mémorisation du code logiciel de remplacement,
- exécution de la mise à jour,
- information de l'application de gestion ACC via le module de gestion de communication 110 des mises à jour effectuées.

Le module 150 d'identification d'abonné, par exemple de type SIM (Suscriber Identification Module), permet l'identification du dispositif de communication APIM dans le réseau de télécommunication RS. Dans le contexte de l'invention, il permet le stockage de données telles que:
- données d'identification du dispositif de communication APIM, sous forme par exemple de code PIN (Personal Identification Number),
- données pour la mise en oeuvre de fonctions d'authentification et/ou de chiffrement de messages (clefs de chiffrement),
- liste d'adresses de destinataires ou d'émetteurs autorisés.

Ces données sont optionnellement gérées à distance par l'application de gestion ACC via le module de gestion de communication 110.

Le support 160 de stockage de données est réalisé par exemple sous forme d'une mémoire de données. Ce support est utilisé notamment pour le stockage temporaire de données ou messages qui ne sont pas transmis immédiatement à leur destinataire.

Le module de gestion de communication 110 est adapté aussi bien pour la gestion des communications en mode message, que pour la gestion des communications en mode session.

Le module de gestion de communication 110 implémente les fonctions de réception et d'émission de messages, ainsi qu'une fonction de transfert des messages reçus en provenance de l'application embarquée ACM1 vers l'application de gestion ACC, et, symétriquement, de transfert des messages reçus en provenance de l'application de gestion ACC vers l'application embarquée ACM1.

Le transfert des messages de l'application embarquée ACM1 vers l'application de gestion ACC - ou vice versa - s'effectue conformément à des règles de transfert et en fonction de paramètres de transfert envoyés par l'émetteur du message avec le message proprement dit. Les messages reçus par le module de gestion de communication 110 sont ainsi composés des éléments suivants:
- des données destinées au module 110, comprenant notamment des paramètres de transfert et/ou de traitement des messages,
- les données proprement dites à transmettre à leur destinataire, constituant le corps du message,
- des données d'en-tête de message (adresse du ou des destinataires, sous-adresses des destinataires en cas de pluralité de destinataires, etc).

Les paramètres de transfert et/ou de traitement sont représentatifs d'instructions de transfert, respectivement d'instructions de traitement des messages. Les paramètres de transfert sont par exemple les suivants :
- "niveau de priorité du message"; ce paramètre définit un niveau de priorité par rapport une échelle prédéfinie de niveaux de priorités; il est codé par exemple au moyen d'un nombre compris entre 1 et 4;
- "demande d'accusé de réception"; ce paramètre définit si un accusé de réception est demandée par l'émetteur au destinataire; il est codé par exemple au moyen d'une valeur binaire;
- "demande d'accusé de lecture", ce paramètre définit si un accusé de lecture est demandée par l'émetteur au destinataire; il est codé par exemple au moyen d'une valeur binaire;
- "service de transport", ce paramètre définit le mode de sélection du service de transport de données; il est codé par exemple au moyen de valeurs prédéfinies correspondant chacune à un mode prédéfini; les modes possibles sont par exemple: le mode automatique (sélection d'un service parmi une liste prédéfinie de services), le mode présélection (présélection d'un service donné), etc;
- "demande de chiffrement", ce paramètre définit si le message doit être chiffré avant transmission au destinataire; il est codé par exemple sous forme de paramètre prenant une valeur binaire;

Le paramètre "niveau de priorité" est utilisé en combinaison avec les autres paramètres pour déterminer le mode de transmission des messages et mettre en oeuvre une gestion de priorité des transferts de message, ainsi qu'une sélection du service de transport approprié au niveau de priorité du message.

Des paramètres de traitement peuvent également être utilisés ainsi que des règles de traitement des messages prenant en compte ces paramètres. Par exemple, le paramètre de traitement "demande de chiffrement", codé par une valeur binaire, est pris en compte pour effectuer ou non un chiffrement des données du message avant transmission.

Le transfert des messages, et plus généralement le traitement et la gestion des messages, sont effectués en fonction de paramètres, joints aux messages et représentatifs d'instructions, et conformément à des règles prédéfinies, définies relativement aux valeurs que peuvent prendre ces paramètres. Une application émettrice de messages peut ainsi commander à distance le module de gestion de communication 110 en spécifiant le mode de transfert ou de traitement des messages qu'elle émet.

Le processus de traitement des messages comprend une première phase d'analyse des paramètres de traitement et/ou de transfert, et une deuxième phase d'exécution du traitement et/ou du transfert, fonction de ces paramètres et du résultat de cette analyse.

Le module 110 examine en premier lieu le paramètre "niveau de priorité" d'un message. Ce niveau est par exemple compris entre 1 et 4. Le traitement dépend du paramètre "niveau de priorité" et, optionnellement, des autres paramètres, notamment du paramètre "service de transport":
- messages de niveau 1: ce sont des messages non urgents; ils sont stockés temporairement pour être transmis de manière différée, en utilisant n'importe quel service de transport ou le moins coûteux, par exemple dans un créneau horaire pendant lequel le tarif de transmission est bas;
- messages de niveau 2: ce sont des messages de priorité basse; ils sont transmis immédiatement; si le paramètre "service de transport" est mis en mode automatique, n'importe quel service de transport disponible est utilisé; si ce paramètre est mis en mode présélection, les messages sont transmis à condition que le service de transport présélectionné soit disponible, sinon ils sont mis en attente;
- messages de niveau 3: ce sont des messages de priorité normale; ils sont transmis immédiatement; le service de transport est déterminé en fonction du paramètre "service de transport"; si ce paramètre est mis en mode automatique, le message est envoyé dès qu'un service de transport est disponible; si ce paramètre est mis en mode présélection, le message est envoyé dès que le service de transport présélectionné est disponible,
- messages de niveau 4: ce sont des messages de priorité haute; ils sont transmis immédiatement; ces messages sont transmis de préférence avec demande systématique d'accusé de réception et de lecture; de préférence une sélection automatique du service de transport est effectuée pour qu'en cas d'échec de transmission sur un service, un autre service de transport soit utilisé.

Lorsque des paramètres "demande d'accusé de réception" et "demande d'accusé de lecture" sont joints à un message, la demande d'accusé de réception/de lecture est transmise de bout en bout à la plate-forme de communication PF puis au dispositif de communication APICC, le module de gestion de communication 110 vérifiant la bonne réception de ces accusés et les transmettant à l'émetteur du message.

Lorsque le module APIM reçoit en provenance de l'application de gestion un message avec des paramètres "demande d'accusé de réception" ou "demande d'accusé de lecture", il se substitue à l'application embarquée ACM1 pour envoyer l'accusé demandé. Ceci permet de limiter au minimum l'échange de messages entre le module APIM et l'application embarquée ACM1.

En généralisant, le module APIM se substitue partiellement au moins à l'application embarquée ACM1 pour la gestion des communications avec l'application de gestion ACC. Il en résulte une simplification dans la réalisation de l'équipement. En contre partie, les fonctionnalités avancées mises en oeuvre dans le module APIM sont complètement indépendantes de l'équipement géré. Ceci permet de concilier des exigences de réduction des coûts et d'augmentation des performances globales de la solution de gestion à distance d'équipement.

Le module de gestion de communication 110 comprend en outre une fonction de sélection d'un service de transport de données; la sélection d'un service de transport est effectuée en fonction de critères prédéfinis, notamment en fonction de critères usuels de qualité de service (fiabilité, débit, ou délai de transmission), ou de critères de coût de transmission (par exemple, le service le moins cher relativement à une plage horaire donnée), et en fonction des paramètres de gestion reçus avec les messages. Le niveau de priorité associé à un paquet de donné détermine notamment quels sont les critères à considérer.

La qualité de service est déterminée soit en fonction de données statistiques obtenues par le dispositif de communication lui-même (statistiques établies pour un ensemble de communications par service et/ou par destinataire), soit à partir de données qui lui fournies par un dispositif de mesure extérieur, raccordé au réseau de télécommunication RS et avec lequel le dispositif de communication APIM peut communiquer. Les données statistiques intéressantes sont par exemple la durée moyenne de transmission d'un message, la bande passante moyenne de transmission, le délai moyen de réponse à un message, etc.

Les coûts de transmission sont déterminés par exemple en fonction de données fournies par les opérateurs de service pour chaque service proposé et pour chaque période d'utilisation (le créneau horaire, le jour de la semaine, etc).

Le module de gestion de communication 110 comprend en outre une fonction de sélection d'un service de transport de données parmi une liste ordonnée prédéfinie de services; cette fonction sélectionne, en cas d'échec de la communication sur un premier service de transport de données, un deuxième service de transport de données de repli.

Le module de gestion de communication 110 comprend en outre une fonction de chiffrement et de déchiffrement des messages pour la mise en oeuvre de communications sécurisées entre l'application embarquée ACM1 et l'application de gestion ACC s'appuyant sur les clefs stockées dans le support 160 de stockage.

Le module de gestion de communication 110 comprend en outre une fonction d'authentification pour la mise en oeuvre, au moyen du module d'identification d'abonné 150, de protocoles d'authentification entre l'application embarquée ACM1 et l'application de gestion ACC ou encore avec un dispositif tiers raccordé au réseau.

Le module de gestion de communication 110 comprend de préférence une fonction de filtrage pour filtrer les messages entrants en provenance du réseau de télécommunication RS, par exemple par vérification de l'adresse de l'émetteur du message et rejet des messages ne correspondant pas à un émetteur autorisé par rapport à une liste d'émetteurs autorisés stockée dans le support 160 de stockage.

Le module de gestion de communication 110 comprend de préférence une fonction de filtrage pour filtrer des messages sortant vers le réseau de télécommunication RS, par exemple par vérification de l'adresse du destinataire du message et rejet des messages ne correspondant pas à un destinataire autorisé par rapport à une liste de destinataires autorisés stockée dans le support 160 de stockage.

Le module de gestion de communication 110 comprend en outre des fonctionnalités avancées de communication, permettant au dispositif de communication APIM non seulement de servir de relais de communication, mais aussi d'initier des communications vers l'application embarquée ACM1, vers l'application de gestion ACC ou vers un autre dispositif raccordé au réseau.

Ces communications sont initiées par exemple dans les cas suivants:
- suite à la détection d'une anomalie par le module de surveillance 121, pour avertir par message soit l'application embarquée ACM2, soit redémarrer l'application embarquée ACM1, soit avertir par message l'application de gestion ACC;
- suite à une demande de mise à jour logicielle effectuée par le module 140 de gestion de configuration, pour avertir par message l'application de gestion ACC du déroulement de la procédure de mise à jour;
- suite à l'obtention de données (date, heure) par le module 130 d'accès à des services du réseau, pour envoyer ces données au module 110 de gestion de communication et éventuellement à l'application embarquée ACM1.

La figure 2b est une représentation schématique d'un mode de réalisation du deuxième dispositif de communication selon l'invention, approprié pour la mise en oeuvre du dispositif de communication APICC, côté application de gestion.

Le dispositif de communication APICC comprend dans ce mode de réalisation les modules suivants:
- une première interface IC1 de communication,
- une deuxième interface IC2 de communication,
- un module 210 de gestion de communication,
- un module 222 de surveillance des communications effectuée via l'interface IC2,
- un module 240 de gestion de configuration
- un module 250 d'identification d'abonné,
- un support 260 de stockage de données.

Les dispositifs de communication APIM et APICC sont réalisés de manière symétrique l'un par rapport à l'autre en ce qui concerne leurs interfaces de communication. Le dispositif de communication APIM possède en outre des modules fonctionnels supplémentaires par rapport au dispositif de communication APICC, permettant d'apporter à l'équipement EQ1 associé au dispositif de communication APIM des services et fonctions améliorant la gestion à distance et les possibilités de communication de cet équipement.

Les différences et similarités entre le module APIM et le module APICC seront présentées.

L'interface de communication IC1 est, comme l'interface IM1, une interface permettant la mise en oeuvre d'une liaison locale de communication compatible avec l'application de gestion ACC. L'interface de communication IC1 est par exemple une interface réseau vers le réseau local du système informatique SI de l'entreprise. En variante, lorsque l'application de gestion ACC et le module APICC sont intégrés un même serveur de traitement de données, l'interface IC1 de communication peut être réalisée au moyen d'un bus de données ou d'une simple interface logicielle par appel de fonction locale.

L'interface IC2 de communication est identique à l'interface IM2.

Le module 210 de gestion de communication, désigné également ci-après module relais 210, est apte à communiquer, d'une part, avec l'application de gestion ACC via l'interface IC1 et, d'autre part, avec l'application embarquée ACM1 distante via l'interface IC2 et via le réseau de télécommunication RS. Ce module relais 210 permet de gérer et relayer les communications entre l'application embarquée ACM1 et l'application de gestion ACC.

Le module de gestion de communication 210 est adapté aussi bien pour la gestion des communications en mode message, que pour la gestion des communications en mode session.

Le module 210 est semblable au module 110 du module APIM, à la différence près que les rôles, vis-à-vis du sous-module 210, joués respectivement par l'application embarquée ACM1 et par l'application de gestion ACC sont inversés par rapport aux rôles joués vis-à-vis du sous-module 110.

Le module 222 de surveillance des communications effectuées via l'interface IC2 est identique ou semblable au module 122. Dans le cas du module 222, une défaillance dans la communication avec la plate-forme de communication PF ou le module APIM entraîne un déclenchement d'une alerte (par exemple par envoi de message) ou l'exécution d'une procédure prédéfinie de gestion de cette défaillance.

Le module 240 de gestion de configuration est dédié à la mise à jour de la configuration logicielle du module APICC et n'intervient de préférence pas dans la configuration logicielle de l'application de gestion ACC.

Le module 250 d'identification d'abonné est identique ou semblable au module 150.

Le support 260 de stockage de données est identique ou semblable au support 160.

Le module 110 de gestion des communications du module APIM est utilisé en coopération avec le module 210 de gestion des communications du module APICC pour établir les communications en mode session entre l'application embarquée ACM1 et l'application de gestion ACC, les modules APIM et APICC n'intervenant plus une fois la session de communication établie.

Une telle session de communication est établie soit à la demande de l'application de gestion ACC, soit à la demande de l'application embarquée ACM1. Dans le deuxième cas, l'application de gestion ACC demande par message au dispositif de communication APICC d'établir une connexion en indiquant un certain nombre de paramètres tels que la qualité de service demandée, le débit nécessaire, etc. Le dispositif de communication APICC sélectionne, au moyen de son module 210 de gestion de communication, le service le plus adapté pour répondre à la demande de l'application de gestion ACC. Dans le cas où l'application embarquée ACM1 est identifiée par l'application de gestion ACC au moyen d'un alias, le module APICC détermine en outre, l'adresse de l'application embarquée ACM1 visée. Cette adresse est par exemple une adresse IP ou un identifiant de type MSISDN (Mobile Station Integrated Services Digital Network). La procédure de résolution d'adresse utilise une base de données donnant la correspondance entre les alias et les adresses, gérée de préférence au niveau de la plate-forme de communication PF. Ce qui suppose que le module APICC interroge la plate-forme de communication PF pour obtenir cette adresse, avant de retourner cette adresse à l'application de gestion ACC. L'application de gestion ACC établit ensuite la connexion en mode session avec l'application embarquée ACM1, les modules APIM et APICC n'intervenant plus après l'établissement de la session entre l'application de gestion ACC et l'application embarquée ACM.

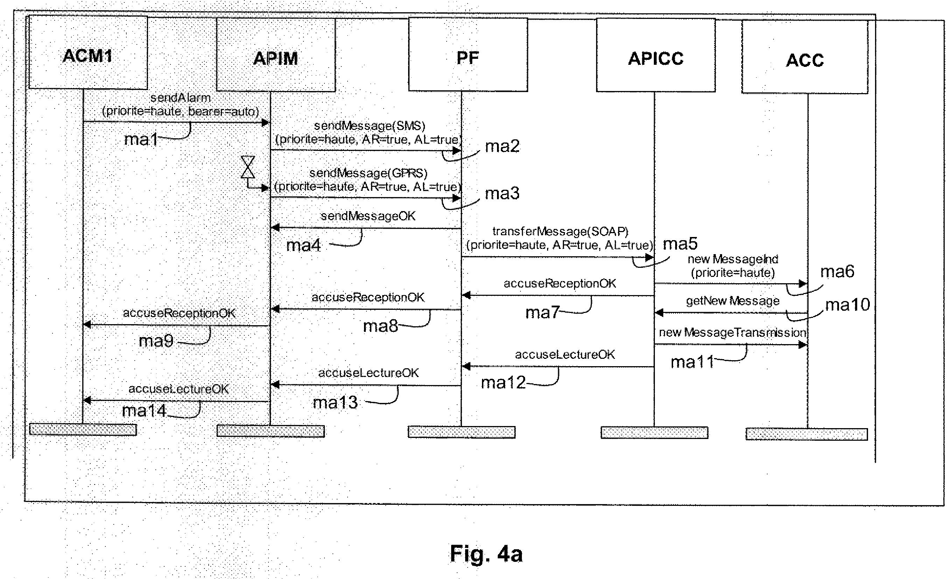

Les figures 4a à 4d donnent des exemples de communications par message pouvant être établies entre les différentes entités du système de gestion selon l'invention.

La figure 4a est un exemple de communication par message effectuée à l'initiative de l'application embarquée ACM1, dans le cas où une alarme doit être remontée vers l'application de gestion ACC, par exemple suite à la détection d'une anomalie dans l'équipement.

L'application embarquée ACM1 demande au module de gestion de communication 110 d'envoyer un message en priorité haute, en mode de sélection automatique du service de transport de données, avec demande d'accusé de réception et d'accusé de lecture. Cela se traduit par l'envoi d'un message ma1 comprenant:
- des données générées par l'application embarquée ACM1 et destinées à l'application de gestion ACC,
- un paramètre indicateur du niveau de priorité du message (priorité haute),
- un paramètre indicateur de demande d'accusé de réception (AR),
- un paramètre indicateur de demande d'accusé de lecture (AL),
- un paramètre indicateur du mode de sélection choisi pour le service de transport de données (mode automatique);

Sur réception de ce message, le module de gestion de communication 110 émet à destination de la plate-forme de communication PF un premier message ma2 en choisissant un service de transport de données. Le mode de sélection du service de transport de données étant le mode automatique, la sélection du service de transport de données est laissée à l'initiative du module de gestion de communication 110. Dans ce cas, le module de gestion de communication 110 sélectionne le service de transport de données défini par défaut. Si la transmission sur ce service de transport par défaut n'aboutit pas (notamment absence de réponse de la plate-forme de communication PF), le module de gestion de communication 110 essaie automatiquement de transmettre un deuxième message ma3 en utilisant un autre service de transport parmi les services disponibles. Le module de gestion de communication 110 essaie à nouveau en cas d'échec, jusqu'à ce que le message soit transmis avec succès à la plate-forme de communication PF.

Lorsque la plate-forme de communication PF reçoit le deuxième message ma3, elle émet un message ma4 à destination du module de gestion de communication 110 un pour lui signifier la bonne réception du message ma3, enregistre le message ma3 puis transmet un message ma5 au module de gestion de communication 210, pour signifier l'arrivée d'un nouveau message pour l'application de gestion ACC.

Le module de gestion de communication 210 télécharge alors les données du message ma3 enregistré, puis envoie à l'application de gestion ACC un message ma6 pour lui signaler l'arrivée d'un nouveau message. Il envoie un message ma7 d'accusé de réception à la plate-forme de communication PF. La plate-forme de communication PF à son tour envoie un message ma8 d'accusé de réception au module de gestion de communication 110; le module de gestion de communication 110 envoie à son tour un message ma9 d'accusé de réception à l'application embarquée ACM1.

L'application de gestion ACC demande par un message ma10 au module de gestion de communication 210 de lui transférer le message téléchargé; le module de gestion de communication 210 transfert à l'application de gestion ACC un message ma11 qui comprend les données du message téléchargé, puis envoie un message ma12 d'accusé de lecture à la plate-forme de communication PF; la plate-forme de communication PF à son tour envoie un message ma13 d'accusé de lecture au module de gestion de communication 110; le module de gestion de communication 110 envoie à son tour un message m14 d'accusé de lecture à l'application embarquée ACM1.

Le dispositif de communication APIM met en oeuvre, de manière transparente pour l'application embarquée ACM1, une gestion automatique, via la plate-forme de communication PF et le dispositif de communication APICC, des accusés de réception et des accusés de lecture: l'application embarquée ACM1 reçoit ces accusés comme si elle communiquait directement avec le dispositif de communication APICC.

En outre, le système met en oeuvre de bout en bout une gestion des priorités entre messages puisque, aussi bien le dispositif de communication APIM, le dispositif de communication APICC que la plate-forme de communication PF sont capables de gérer la notion de priorité entre messages.

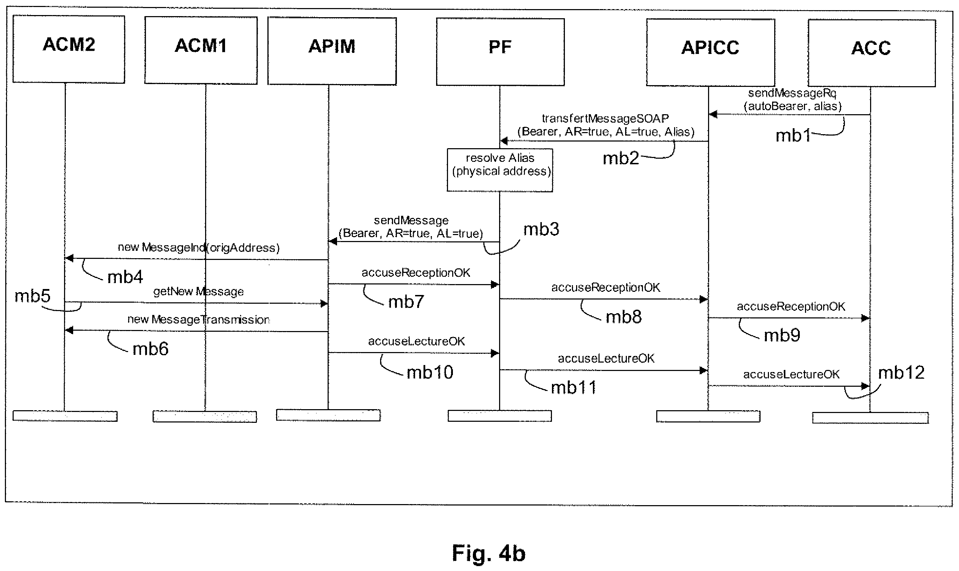

Le cas de la figure 4b montre l'envoi d'un message de l'application de gestion ACC vers un équipement EQ2 qui fait partie d'un sous-réseau. Cette configuration est représentée sur la figure 1a. Dans ce cas, l'application de gestion ACC envoie un message mb1 pour demander au dispositif de communication APICC d'envoyer un message à l'équipement EQ2, en utilisant un alias pour l'identifier.

Le dispositif de communication APICC transfert le message mb2 à la plate-forme de communication PF qui détermine, à partir de l'alias, l'adresse physique du dispositif de communication APIM dont l'équipement EQ2 dépend, puis lui transfert le message mb3 au dispositif de communication APIM. Celui-ci transfert en suite un message mb4 au destinataire final, c'est-à-dire à équipement EQ2.

L'application embarquée ACM2 de l'équipement EQ2 demande mb5 au dispositif de communication APIM de lui transférer le message. Le dispositif de communication APIM transfert le message mb6 à l'application embarquée ACM2.

Le dispositif de communication APIM prend en charge la transmission à l'application de gestion ACC d'un accusé de réception via les messages mb7, mb8 et mb9 suite à la réception du message mb3. Le dispositif de communication APIM prend en charge également la transmission à l'application de gestion ACC d'un accusé de lecture via les messages mb10, mb11 et mb12 suite au chargement du message mb6 par l'application embarquée ACM2.

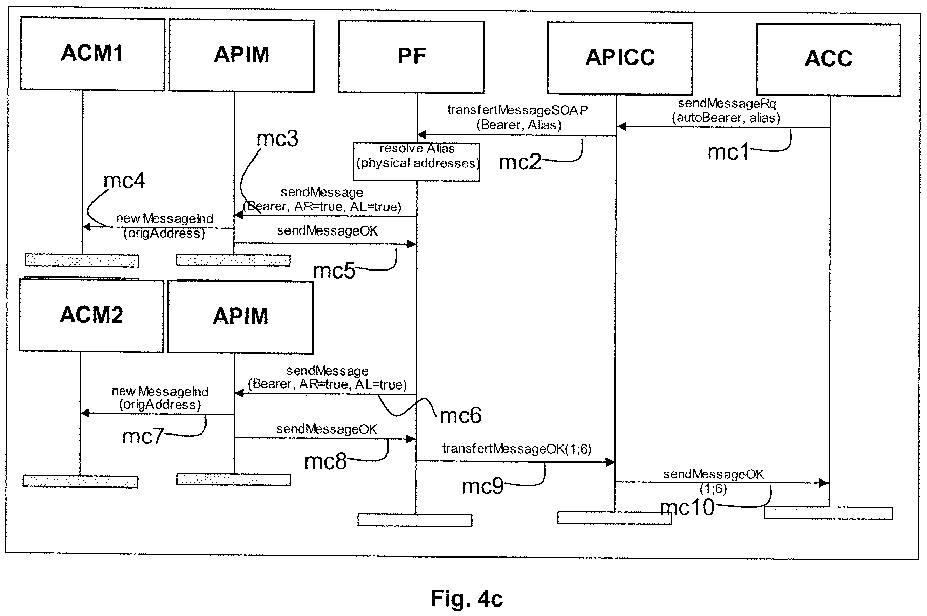

Le cas de la figure 4c montre l'envoi d'un seul et même message à un groupe d'équipements représenté de manière simplifié par les équipements EQ1, EQ2. Dans ce cas, l'application de gestion ACC envoie au dispositif de communication APICC un message mc1 pour lui demander d'envoyer un message au groupe d'équipements, utilisant un alias pour identifier ce groupe.

Le dispositif de communication APICC transfert le message mc2 à la plate-forme de communication PF qui détermine à partir de l'alias les adresses physiques des différents équipements, et donc l'adresse physique du dispositif de communication APIM dont chacun de ces équipements dépend.

La plate-forme de communication PF transfert un premier message mc3 au dispositif de communication APIM pour l'application embarquée ACM1 du premier équipement EQ1. Au moins une donnée d'adressage est jointe à ce message permettant au module APIM d'identifier l'équipement destinataire du message. Le message est ensuite transféré mc4 à l'application embarquée ACM1 par le dispositif de communication APIM qui envoie un acquittement mc5 à la PF.

La plate-forme de communication PF transfert un deuxième message mc6 au dispositif de communication APIM pour l'application embarquée ACM2 du deuxième équipement EQ2. Au moins une donnée d'adressage est jointe à ce message permettant au module APIM d'identifier l'équipement destinataire du message. Le message est ensuite transféré mc7 à l'application embarquée ACM1 par le dispositif de communication APIM qui envoie un acquittement mc8 à la PF.

C'est la plate-forme PF qui reçoit les acquittements de tous les équipements et qui fait une seule réponse mc9, mc10 à l'application de gestion ACC contenant le résultat.

En variante, lorsque tous les équipements destinataires sont associés à un même dispositif de communication APIM, un seul message peut être transmis de la plate-forme de communication PF vers ce module APIM qui prend alors en charge l'envoi d'un acquittement global lorsque tous les équipements destinataires ont reçus le message qui leur est destiné.

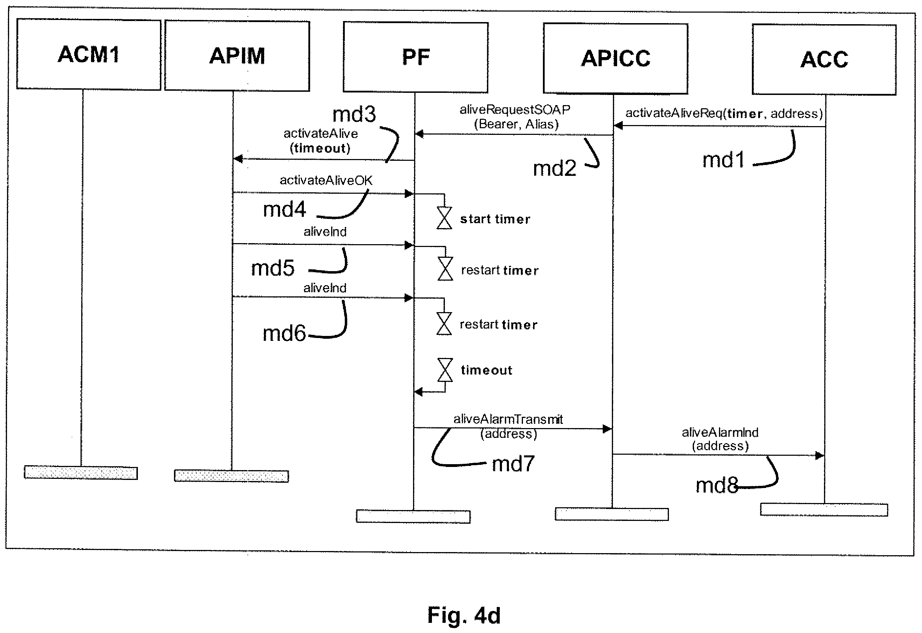

Le cas de la figure 4d montre la mise en oeuvre de la fonction de surveillance mise en oeuvre entre le sous-module 122 et la plate-forme de communication PF. Pour invoquer cette fonction, l'application de gestion ACC demande l'activation de cette fonctionnalité par un premier message md1 transféré via dispositif de communication APICC sous forme de requête md2 à la plate-forme PF.

La plate-forme PF transfert par un message md3 la demande au dispositif de communication APIM puis déclenche un compteur. Dès lors, le module APIM envoie régulièrement de messages md4, md5, md6 vers la plate-forme PF pour remettre à zéro le compteur de la plate-forme de communication PF.

Dans le cas où le module APIM se trouve dans l'incapacité de communiquer, le compteur arrivera à une valeur maximale prédéfinie, et la plate-forme de communication PF déclenchera une procédure d'alerte pour avertir l'application de gestion ACC du problème de communication. Cette procédure d'alerte consiste par exemple en l'envoi d'un message d'alarme md7, transféré md8 vers l'application de gestion ACC par le dispositif de communication APICC.

D'autres protocoles d'échanges de messages peuvent être définis pour la mise en oeuvre de différentes situations ou de différents cas d'utilisation des dispositifs de communication APIM et APICC.

Ces deux modules constituent des relais de communication intelligents, prenant en charge des fonctions avancées de communications, commandées en fonction des besoins de l'application embarquée dans l'équipement ou de l'application de gestion. Ils permettent d'apporter un certain degré de standardisation dans le déploiement de solution M2M, parce qu'ils intègrent des fonctions de communication génériques, adaptées et adaptables à la plupart des équipements. Il en résulte une simplification de la conception des équipements et un coût réduit de déploiement des systèmes de gestion à distance d'équipement.

## Revendications

1. Système de communication pour la mise en oeuvre d'un système de gestion à distance d'au moins un équipement (EQ1) au moyen d'une application de gestion (ACC) apte à communiquer via un réseau de télécommunication (RS) avec une application embarquée (ACM1) dans ledit équipement, ledit système de communication comprenant :
- un premier dispositif de communication (APICC) comprenant :
- une première interface de communication (IC1) pour la mise en oeuvre d'une liaison de communication avec ladite application de gestion,
- une deuxième interface de communication (IC2) pour l'accès audit réseau de télécommunication,
- des premiers moyens de gestion de communication (210) apte à communiquer avec ladite application de gestion via ladite première interface et avec ladite application embarquée via ladite deuxième interface et ledit réseau de télécommunication, lesdits premiers moyens de gestion de communication servant de relais de communication pour les communications par message entre ladite application embarquée et ladite application de gestion, lesdits premiers moyens de gestion de communication étant aptes à transférer au moins un message, en provenance d'une des deux applications vers l'autre application, selon des règles de transfert prédéfinies et en fonction d'au moins un paramètre, joint audit message et au moyen duquel un mode de transfert est spécifié pour ledit message par l'application émettrice dudit message,
- un deuxième dispositif de communication (APIM) comprenant :
- une troisième interface de communication (IM1) pour la mise en oeuvre d'une liaison locale de communication avec ladite application embarquée,
- une quatrième interface de communication (IM2) pour l'accès audit réseau de télécommunication,
- des deuxièmes moyens de gestion de communication (110) aptes à communiquer avec ladite application embarquée via ladite troisième interface et avec ladite application de gestion via ladite quatrième interface et ledit réseau de télécommunication, lesdits deuxièmes moyens de gestion de communication servant de relais de communication pour les communications par message entre ladite application embarquée et ladite application de gestion, lesdits deuxièmes moyens de gestion de communication étant aptes à transférer au moins un message, en provenance d'une des deux applications vers l'autre application, selon des règles de transfert prédéfinies et en fonction d'au moins un paramètre, joint audit message et au moyen duquel un mode de transfert est spécifié pour ledit message par l'application émettrice dudit message,
ledit premier dispositif et ledit deuxième dispositif étant conçus pour communiquer l'un avec l'autre via ledit réseau de télécommunication pour la mise en oeuvre des communications entre ladite application de gestion et ladite application embarquée.

2. Système selon la revendication 1 **caractérisé en ce que** lesdites règles de transfert sont indépendantes de ladite application embarquée et de ladite application de gestion.

3. Système selon l'une quelconque des revendications 1 à 2 **caractérisé en ce que** lesdits premiers ou deuxièmes moyens de gestion de communication sont aptes à établir une session de communication entre ladite application embarquée et ladite application de gestion, lesdits moyens de gestion de communication du premier dispositif ou du deuxième dispositif étant transparents vis-à-vis de ladite session après l'établissement de ladite session.

4. Système selon l'une quelconque des revendications 1 à 3 **caractérisé en ce que** ledit au moins un paramètre comprend un premier paramètre définissant un mode de sélection pour la sélection d'un service de transport de données à utiliser dans la transmission dudit message, et **en ce que** lesdits premiers ou deuxièmes moyens de gestion de communication comprennent des moyens de sélection de service de transport de données pour sélectionner, en fonction desdites règles de transfert et dudit premier paramètre, un service parmi plusieurs services de transport de données supportés par ledit réseau de télécommunication.

5. Système selon la revendication 4 **caractérisé en ce que** ledit au moins un paramètre comprend un deuxième paramètre définissant un niveau de priorité pour ledit message à transmettre et **en ce que** lesdits moyens de sélection de service de transport de données sont conçus pour sélectionner, en fonction desdites règles de transfert et en fonction desdits premier et deuxième paramètres, un service parmi plusieurs services de transport de données supportés par ledit réseau de télécommunication.

6. Système selon la revendication 4 ou 5 **caractérisé en ce que** lesdits moyens de sélection sont adaptés pour, en cas d'échec de communication sur un premier service de transport, sélectionner un deuxième service de transport de repli.

7. Système selon l'une quelconque des revendications 4 à 6 **caractérisé en ce que** lesdits moyens de sélection de service de transport de données sont conçus pour sélectionner un service en fonction d'un critère de coût de communication.

8. Système selon l'une quelconque des revendications 4 à 7 **caractérisé en ce que** lesdits moyens de sélection de service de transport de données sont conçus pour sélectionner un service en fonction d'un critère de qualité de service.

9. Système selon la revendication 1 ou selon l'une quelconque des revendications 2 à 8 **caractérisé en ce que** lesdits moyens de gestion de communication du deuxième dispositif sont adaptés pour communiquer via ladite troisième interface avec au moins deux équipements intégrant chacun une application embarquée et pour router un message reçu en provenance de ladite application de gestion à l'équipement destinataire du message en fonction d'au moins une donnée d'adressage jointe audit message.

10. Système selon la revendication 1 ou selon l'une quelconque des revendications 2 à 9, **caractérisé en ce que** le deuxième dispositif communique avec ladite application de gestion par l'intermédiaire d'un relais de communication (PF; APICC) interconnecté audit réseau de communication et **en ce qu'**il comprend des moyens de surveillance (122) pour envoyer à intervalles de temps réguliers audit relais de communication un message prédéfini, véhiculé via au moins un service de transport de données et destiné à permettre la détection d'anomalies prédéfinies dans la communication via ledit au moins un service de transport de données.

11. Système selon la revendication 1 ou selon l'une quelconque des revendications 2 à 10, **caractérisé en ce que** le deuxième dispositif comprend des moyens de surveillance (121) pour :
- demander à ladite application embarquée de lui envoyer à intervalles de temps réguliers un message prédéfini,
- surveiller la réception desdits messages prédéfinis,
- alerter ladite application de gestion en cas d'anomalie ou d'interruption dans la réception desdits messages prédéfinis.

12. Système de communication selon la revendication 1, **caractérisé en ce que** ledit premier dispositif et ledit deuxième dispositif sont conçus pour communiquer l'un avec l'autre par l'intermédiaire d'une plate-forme de communication (PF) servant de relais de communication entre ledit premier dispositif et ledit deuxième dispositif.

13. Système de communication selon la revendication 12, **caractérisé en ce que** ladite plate-forme de communication est adaptée pour demander par message au premier dispositif de communication de lui envoyer à intervalles de temps réguliers un message prédéfini, et pour alerter ladite application de gestion en cas d'anomalie ou d'interruption dans l'envoi des messages prédéfinis.

## Patentansprüche

1. Kommunikationssystem zur Implementierung eines Systems zur Fernverwaltung wenigstens einer Einrichtung (EQ1) mittels einer Verwaltungsanwendung (ACC), die in der Lage ist, über ein Telekommunikationsnetz (RS) mit einer in die Einrichtung integrierten Anwendung (ACM1) zu kommunizieren, wobei das Kommunikationssystem umfasst:
- eine erste Kommunikationsvorrichtung (APICC), welche umfasst:
- eine erste Kommunikationsschnittstelle (IC1) für die Realisierung einer Kommunikationsverbindung mit der Verwaltungsanwendung,
- eine zweite Kommunikationsschnittstelle (IC2) für den Zugang zu dem Telekommunikationsnetz,
- erste Kommunikationsverwaltungsmittel (210), die in der Lage sind, mit der Verwaltungsanwendung über die erste Schnittstelle und mit der integrierten Anwendung über die zweite Schnittstelle und das Telekommunikationsnetz zu kommunizieren, wobei die ersten Kommunikationsverwaltungsmittel als Kommunikationsrelais für die Nachrichtenübermittlung zwischen der integrierten Anwendung und der Verwaltungsanwendung dienen, wobei die ersten Kommunikationsverwaltungsmittel in der Lage sind, wenigstens eine von einer der zwei Anwendungen stammende Nachricht zu der anderen Anwendung zu übertragen, gemäß vordefinierten Übertragungsregeln und in Abhängigkeit von wenigstens einem Parameter, welcher der Nachricht beigefügt ist und mittels dessen durch die Anwendung, welche diese Nachricht sendet, ein Übertragungsmodus für die Nachricht festgelegt wird,
- eine zweite Kommunikationsvorrichtung (APIM), welche umfasst:
- eine dritte Kommunikationsschnittstelle (IM1) für die Realisierung einer lokalen Kommunikationsverbindung mit der integrierten Anwendung,
- eine vierte Kommunikationsschnittstelle (IM2) für den Zugang zu dem Telekommunikationsnetz,
- zweite Kommunikationsverwaltungsmittel (110), die in der Lage sind, mit der integrierten Anwendung über die dritte Schnittstelle und mit der Verwaltungsanwendung über die vierte Schnittstelle und das Telekommunikationsnetz zu kommunizieren, wobei die zweiten Kommunikationsverwaltungsmittel als Kommunikationsrelais für die Nachrichtenübermittlung zwischen der integrierten Anwendung und der Verwaltungsanwendung dienen, wobei die zweiten Kommunikationsverwaltungsmittel in der Lage sind, wenigstens eine von einer der zwei Anwendungen stammende Nachricht zu der anderen Anwendung zu übertragen, gemäß vordefinierten Übertragungsregeln und in Abhängigkeit von wenigstens einem Parameter, welcher der Nachricht beigefügt ist und mittels dessen durch die Anwendung, welche diese Nachricht sendet, ein Übertragungsmodus für die Nachricht festgelegt wird,
wobei die erste Vorrichtung und die zweite Vorrichtung dafür eingerichtet sind, zur Durchführung von Kommunikation zwischen der Verwaltungsanwendung und der integrierten Anwendung über das Telekommunikationsnetz miteinander zu kommunizieren.

2. System nach Anspruch 1, **dadurch gekennzeichnet, dass** die Übertragungsregeln unabhängig von der integrierten Anwendung und von der Verwaltungsanwendung sind.

3. System nach einem der Ansprüche 1 bis 2, **dadurch gekennzeichnet, dass** die ersten oder zweiten Kommunikationsverwaltungsmittel in der Lage sind, eine Kommunikationssitzung zwischen der integrierten Anwendung und der Verwaltungsanwendung aufzubauen, wobei die Kommunikationsverwaltungsmittel der ersten Vorrichtung oder der zweiten Vorrichtung nach dem Aufbau der Sitzung transparent gegenüber der Sitzung sind.

4. System nach einem der Ansprüche 1 bis 3, **dadurch gekennzeichnet, dass** der wenigstens eine Parameter einen ersten Parameter umfasst, der einen Auswahlmodus für die Auswahl eines bei der Übertragung der Nachricht zu verwendenden Datentransportdienstes definiert, und dadurch, dass die ersten oder zweiten Kommunikationsverwaltungsmittel Datentransportdienst-Auswahlmittel umfassen, um in Abhängigkeit von den Übertragungsregeln und von dem ersten Parameter einen Dienst aus mehreren Datentransportdiensten, die von dem Telekommunikationsnetz unterstützt werden, auszuwählen.

5. System nach Anspruch 4, **dadurch gekennzeichnet, dass** der wenigstens eine Parameter einen zweiten Parameter umfasst, der ein Prioritätsniveau für die zu übertragende Nachricht definiert, und dadurch, dass die Datentransportdienst-Auswahlmittel dafür eingerichtet sind, in Abhängigkeit von den Übertragungsregeln und in Abhängigkeit von dem ersten und dem zweiten Parameter einen Dienst aus mehreren Datentransportdiensten, die von dem Telekommunikationsnetz unterstützt werden, auszuwählen.

6. System nach Anspruch 4 oder 5, **dadurch gekennzeichnet, dass** die Auswahlmittel dafür ausgelegt sind, im Falle eines Scheiterns der Kommunikation mit einem ersten Transportdienst einen zweiten Ersatz-Transportdienst auszuwählen.

7. System nach einem der Ansprüche 4 bis 6, **dadurch gekennzeichnet, dass** die Datentransportdienst-Auswahlmittel dafür eingerichtet sind, einen Dienst in Abhängigkeit von einem Kommunikationskosten-Kriterium auszuwählen.

8. System nach einem der Ansprüche 4 bis 7, **dadurch gekennzeichnet, dass** die Datentransportdienst-Auswahlmittel dafür eingerichtet sind, einen Dienst in Abhängigkeit von einem Dienstgüte-Kriterium auszuwählen.

9. System nach Anspruch 1 oder nach einem der Ansprüche 2 bis 8, **dadurch gekennzeichnet, dass** die Kommunikationsverwaltungsmittel der zweiten Vorrichtung dafür ausgelegt sind, über die dritte Schnittstelle mit wenigstens zwei Einrichtungen zu kommunizieren, in die jeweils eine integrierte Anwendung integriert ist, und eine von der Verwaltungsanwendung stammende empfangene Nachricht in Abhängigkeit von wenigstens einem Adressierungs-Datenelement, das der Nachricht beigefügt ist, zu der Zieleinrichtung der Nachricht zu routen.

10. System nach Anspruch 1 oder nach einem der Ansprüche 2 bis 9, **dadurch gekennzeichnet, dass** die zweite Vorrichtung mit der Verwaltungsanwendung über ein Kommunikationsrelais (PF; APICC) kommuniziert, das mit dem Kommunikationsnetz verbunden ist, und dadurch, dass es Überwachungsmittel (122) umfasst, um in regelmäßigen Zeitabständen an das Kommunikationsrelais eine vordefinierte Nachricht zu senden, die über wenigstens einen Datentransportdienst transportiert wird und dazu bestimmt ist, die Detektion von vordefinierten Anomalien in der Kommunikation über den wenigstens einen Datentransportdienst zu ermöglichen.

11. System nach Anspruch 1 oder nach einem der Ansprüche 2 bis 10, **dadurch gekennzeichnet, dass** die zweite Vorrichtung Überwachungsmittel (121) umfasst, um:
- die integrierte Anwendung aufzufordern, ihr in regelmäßigen Zeitabständen eine vordefinierte Nachricht zu senden,
- den Empfang der vordefinierten Nachrichten zu überwachen,
- die Verwaltungsanwendung im Falle einer Anomalie oder einer Unterbrechung beim Empfang der vordefinierten Nachrichten zu warnen.

12. Kommunikationssystem nach Anspruch 1, **dadurch gekennzeichnet, dass** die erste Vorrichtung und die zweite Vorrichtung dafür eingerichtet sind, über eine Kommunikationsplattform (PF) miteinander zu kommunizieren, die als Kommunikationsrelais zwischen der ersten Vorrichtung und der zweiten Vorrichtung dient.

13. Kommunikationssystem nach Anspruch 12, **dadurch gekennzeichnet, dass** die Kommunikationsplattform dafür ausgelegt ist, durch eine Nachricht die erste Kommunikationsvorrichtung aufzufordern, ihr in regelmäßigen Zeitabständen eine vordefinierte Nachricht zu senden und im Falle einer Anomalie oder einer Unterbrechung beim Senden der vordefinierten Nachrichten die Verwaltungsanwendung zu warnen.

## Claims

1. Communication system for implementing a system for remotely managing at least one item of equipment (EQ1), by means of a management application (ACC) able to communicate via a telecommunication network (RS) with an application (ACM1) embedded in said item of equipment, said communication system comprising:
- a first communication device (APICC) comprising:
- a first communication interface (IC1) for implementing a communication link with said management application,
- a second communication interface (IC2) for accessing said telecommunication network,
- first communication management means (210) able to communicate with said management application via said first interface and with said embedded application via said second interface and said telecommunication network, said first communication management means serving
as communication relay for the message-based communications between said embedded application and said management application, said first communication management means being able to transfer at least one message, originating from one of the two applications to the other application, according to predefined transfer rules and as a function of at least one parameter, appended to said message and by means of which a transfer mode is specified for said message by the application sending said message,
- a second communication device (APIM) comprising:
- a third communication interface (IM1) for implementing a local communication link with said embedded application,
- a fourth communication interface (IM2) for accessing said telecommunication network,
- second communication management means (110) able to communicate with said embedded application via said third interface and with said management application via said fourth interface and said telecommunication network, said second communication management means serving as communication relay for the message-based communications between said embedded application and said management application, said second communication management means being able to transfer at least one message, originating from one of the two applications to the other application, according to predefined transfer rules and as a function of at least one parameter, appended to said message and by means of which a transfer mode is specified for said message by the application sending said message, said first device and said second device being designed to communicate with one another via said telecommunication network for implementing communications between said management application and said embedded application.

2. System according to Claim 1 **characterized in that** said transfer rules are independent of said embedded application and of said management application.

3. System according to either one of Claims 1 and 2 **characterized in that** said first or second communication management means are able to establish a communication session between said embedded application and said management application, said communication management means of the first device or the second device being transparent in relation to said session after the establishment of said session.

4. System according to any one of Claims 1 to 3 **characterized in that** said at least one parameter comprises a first parameter defining a selection mode for selecting a data transport service to be used in the transmission of said message, and **in that** said first or second communication management means comprise data transport service selection means for selecting, as a function of said transfer rules and of said first parameter, a service from among several data transport services supported by said telecommunication network.

5. System according to Claim 4 **characterized in that** said at least one parameter comprises a second parameter defining a priority level for said message to be transmitted and **in that** said data transport service selection means are designed to select, as a function of said transfer rules and as a function of said first and second parameters, a service from among several data transport services supported by said telecommunication network.

6. System according to Claim 4 or 5 **characterized in that** said selection means are adapted for, in the event of communication failure on a first transport service, selecting a second fallback transport service.

7. System according to any one of Claims 4 to 6 **characterized in that** said data transport service selection means are designed to select a service as a function of a communication cost criterion.

8. System according to any one of Claims 4 to 7 **characterized in that** said data transport service selection means are designed to select a service as a function of a quality of service criterion.

9. System according to Claim 1 or according to any one of Claims 2 to 8 **characterized in that** said communication management means of the second device are adapted for communicating via said third interface with at least two items of equipment each integrating an embedded application and for routing a received message originating from said management application to the message recipient item of equipment as a function of at least one addressing data item appended to said message.

10. System according to Claim 1 or according to any one of Claims 2 to 9, **characterized in that** the second device communicates with said management application by way of a communication relay (PF; APICC) interconnected with said communication network and **in that** it comprises monitoring means (122) for dispatching at regular time intervals to said communication relay a predefined message, conveyed via at least one data transport service and intended to allow the detection of predefined anomalies in the communication via said at least one data transport service.

11. System according to Claim 1 or according to any one of Claims 2 to 10, **characterized in that** the second device comprises monitoring means (121) for:
- requesting said embedded application to dispatch a predefined message to it at regular time intervals,
- monitoring the reception of said predefined messages,
- alerting said management application in the event of anomaly or interruption in the reception of said predefined messages.

12. Communication system according to Claim 1, **characterized in that** said first device and said second device are designed to communicate with one another by way of a communication platform (PF) serving as communication relay between said first device and said second device.

13. Communication system according to Claim 12, **characterized in that** said communication platform is adapted for requesting by message the first communication device to dispatch a predefined message to it at regular time intervals, and for alerting said management application in the event of anomaly or interruption in the dispatching of the predefined messages.
